# EUROPÄISCHE PATENTANMELDUNG

(11) **EP 1 889 679 A2**
(43) Veröffentlichungstag der Anmeldung: **20.02.2008**
(21) Anmeldenummer: 07466004.4
(22) Anmeldetag: 21.02.2007
(51) Int. Cl.: B23D 15/00, B23D 35/00

(54) **Methode und Anlage zur Blechtrennung**

(30) Priorität: 23.02.2006 CZ 20060117
(71) Anmelder: Skoda Auto a.s., 293 60 Mlada Boleslav (CZ)
(72) Erfinder: Bures, Petr, 293 01 Mladá Boleslav (CZ); Prokop, Vit, 463 43 Cesky Dub (CZ)

(57) **Zusammenfassung**

Die vorliegende Erfindung betrifft die Methode und Anlage zur Trennung von Rollenblechen (P) im Pressprozess auf Aufschnittlinien (Z). Sie besteht in der Methode des Blechzuschnitts (P) auf Tafeln (T) in der Form von Radientrapezen (12,14,15,16, 16`).

## Beschreibung

### Bereich der Technik

Die vorliegende Erfindung betrifft die Methode und Anlage zur Trennung von Rollenblechen im Pressprozess auf Aufschnittlinien.

### Bisheriger Stand der Technik

Der gegenwärtige Stand der Trennung von Rollenblech auf Aufschnittlinien ermöglicht zwei Grundmethoden der Trennung entsprechend dem verwendeten Aufschnittwerkzeug.
Bei Verwendung von Linearschere mit der Möglichkeit der Rotation der Scherenachse von ±30° können rechtwinkelige oder trapezförmige Tafeln geschnitten werden.
Bei Einsatz eines Profil-Schnittwerkzeug kann eine spezifische Aufschnittform für jeweils ein oder mehrere Teile (Tafel) erreicht werden. Hier handelt es sich um eine achsabgestimmte Form im Sinne der Verschiebung von Blech und Werkzeug.
Der Nachteil beider Methoden besteht darin, dass sie die möglichst beste Nutzung des Vormaterials (Blech - dieses wird der Blechtrennanlage in Rollen zugebracht, wobei das Blech vor dem Eintritt in die Anlage geradegerichtet wird), und gleichzeitig die Reduzierung der Notwendigkeit Aufschnittstanzen herzustellen, nicht ermöglichen. Zurzeit besteht in den meisten Fällen nicht die Anforderung an den Zuschnitt von rechtwinkligen Formen der Tafeln, sondern von Radienformen.

### Grundlage der Erfindung

Die oben genannten Nachteile werden durch die Methode und Anlage zur Trennung von Rollenblechen im Pressprozess auf Aufschnittlinien beseitigt. Die Grundlage der Erfindung besteht in der Verwendung einer Schere mit einer Radiuswirkform (R2000-3000mm). In günstiger Ausführung kann aufgrund einer größeren Variabilität, bzw. der Erreichung einer größeren Rotationsauslenkung der Schere am Aufschnitt eine Schere mit einer Rotation von bis zu ±30° eingesetzt werden. Diese Rotation entsteht durch die Ausschwenkung der Scheren-Schnittkurvenmitte gegenüber der Rollenachse.
In einer weiteren günstigen Ausführung ist eine Kassettenkonstruktion möglich - in einem System können mehrere Schnittwerkzeuge mit einer Radiuswirkform (R2000 - 3000mm) kombiniert werden.

### Übersicht der Abbildungen in der Zeichnung

Die Erfindung wird mittels Schemen und Bildern näher erläutert, auf welchen die Abb. 1 das Schema des Schnittwerkzeugs, das Blech auf Radiustrapeze trennt, dargestellt ist, auf der Abb. 2 ist eine Seitenansicht des Schnittwerkzeugs dargestellt und die Abb. 3 stellt die Form der abgetrennten Blechtafel bei Verwendung einer Linearschere und einer Schere mit Radiuswirkform, bzw. die Einsparung bei ihrem Einsatz dar.

### Ausführungsbeispiele

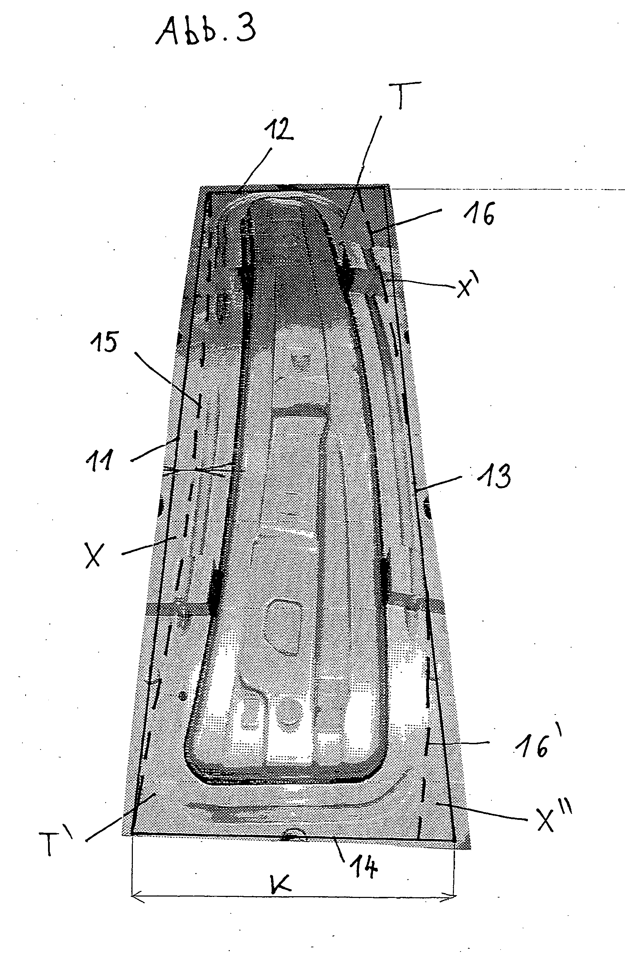

Die vorliegende Erfindung betrifft die Methode und Anlage zur Trennung von Rollenblechen (P) im Pressprozess auf Aufschnittlinien (Z). Sie besteht in der Methode des Blechzuschnitts (P) auf Tafeln (T) in der Form von Radientrapezen (12, 14, 15, 16, 16`). Die bisherige Methode entsprechend dem bestehenden bekannten Stand der Technik ermöglicht den Zuschnitt auf Tafeln (T') in der Form von Lineartrapezen (11, 12, 13, 14). Einsparungen (X, X',X"), die durch die Methode und Blechtrennanlage entsprechend der vorliegenden Erfindung entstehen, sind aus der Abb. 3 ersichtlich. Die heutigen zur Herstellung von Blech-Formteilen z.B. in der Automobilindustrie eingesetzten Aufschnittlinien schneiden Hunderttausende bis Millionen gleiche Tafeln in der Form von Lineartrapezen. Es ist ersichtlich, dass es durch den Einsatz der Erfindung zu bedeutenden Materialeinsparungen kommen wird.

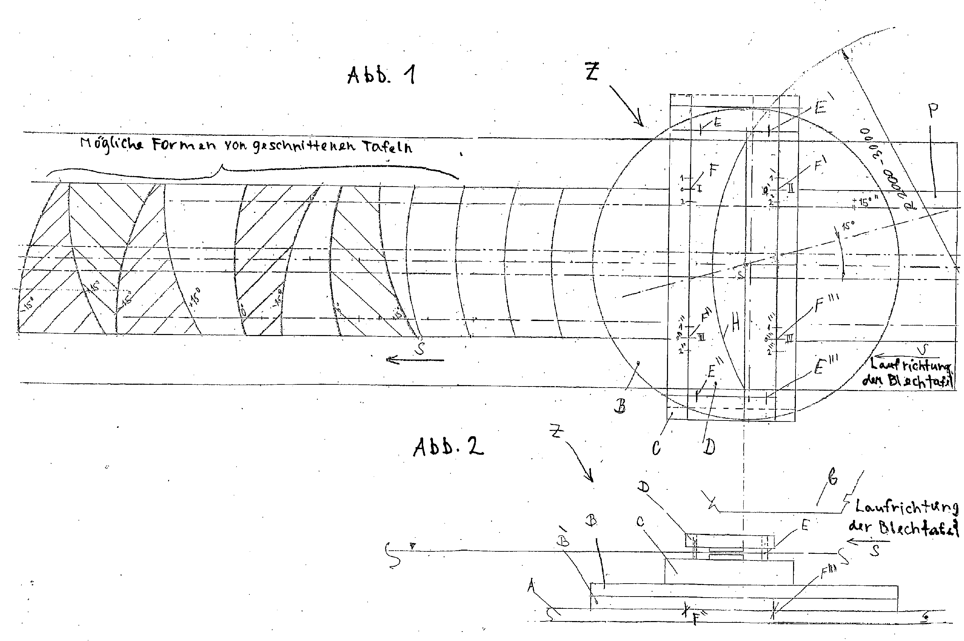

Auf der Abb. 1 und 2 ist das Schema des Schnittwerkzeugs (Z) dargestellt, welches Blech auf Radientrapeze (T) schneidet, und das aus der Presstisch-Spannplatte (A), den Rotationssegmenten des Schnittwerkzeugs (B, B'), einem festen Unterteil (C) und einem beweglichen Oberteil (D) besteht. Ein bedeutender Teil der Anlage (Z) ist die Schere (H) mit einer Radiuswirkform. Der Radius bewegt sich je nach Ausführung und Bedarf zwischen 2000 und 3000 mm.

Die Trennung von Rollenblech (P) erfolgt so, dass nach der Blechrollenabwicklung und -geraderichtung dieses Blech durchlaufend in die Blechtrennanlage (Z) in der Blechbewegungsrichtung (S) mit Hilfe von Zentrierungsöffnungen und Bolzen (F, F', F", F''', 0, 1, 2, 0', 1', 2', 0", 1", 2",0"', 1"', 2"') hinein geschoben wird. Die Blechtrennung (P) erfolgt in Takten, wo zuerst die Blechbewegung gestoppt wird, das bewegliche Unterteil (D) mit der Schere (H) mit der geforderten Radius-Schnittform mit einer großen Kraft und Geschwindigkeit mittels des Pressstempels (G) mittels der Führungsbolzen (E, E', E", E"') senkrecht abgelassen und das Blech (P) abgeschnitten wird. Nachfolgend wird das Blech um den Schritt (K) verschoben.

### Industrielle Nutzbarkeit

Die Methode und die Anlage entsprechend der Erfindung dienen zur Trennung von Rollenblechen auf das resultierende Bogentrapez im Pressprozess auf Aufschnittlinien.

## Patentansprüche

1. Methode der Trennung von Rollenblechen (P) im Pressprozess auf Aufschnittlinien (Z), **dadurch gekennzeichnet, dass** das Blech auf Tafeln (T) in der Form eines Radiustrapezes (12,14,15,16,16`) getrennt wird.

2. Die Methode entsprechend dem Anspruch 1, **dadurch gekennzeichnet, dass** die Blechtafel in der Form von Radiustrapezen einen Radius der Querseiten zur Blechbewegungsrichtung zwischen R2000 und R3000mm hat.

3. Anlage zur Ausführung der Methode entsprechend den Ansprüchen 1 und 2, **dadurch gekennzeichnet, dass** sie aus der beweglichen Presstisch-Spannplatte (A), den Rotationssegmenten des Schnittwerkzeugs (B, B'), dem festen Unterteil (C) und dem beweglichen Oberteil (D) besteht, in dem die Schere (H) mit der Radius-Schnittform eingespannt ist, wobei der Radius der Scherenwirkform zwischen R2000 und R3000 mm liegt.

4. Anlage zur Ausführung der Methode entsprechend dem Anspruch 3, **dadurch gekennzeichnet, dass** die Schere (H) ±30° rotiert, wobei diese Rotation durch die Ausschwenkung der Scheren-Schnittkurvenmitte gegenüber der Rollenachse entsteht.

5. Anlage zur Ausführung der Methode entsprechend dem Anspruch 3, **dadurch gekennzeichnet, dass** in einer Anlage mehrere Schnittwerkzeuge als eins eingesetzt werden können, und zwar mit unterschiedlichen Radiuswirkformen im Bereich von R2000 bis R3000 mm.
